# EUROPEAN PATENT APPLICATION

(11) **EP 0 856 497 A1**
(43) Date of publication of application: **05.08.1998**
(21) Application number: 98101096.0
(22) Date of filing: 22.01.1998
(51) Int. Cl.: C04B 30/02

(54) **Porous inorganic material and process for producing the same**

(30) Priority: 22.01.1997 JP 21948/97; 22.01.1997 JP 21950/97
(71) Applicant: NICHIAS CORPORATION, Tokyo (JP)
(72) Inventor: Iizuka, Tateoki, Hamamatsu-shi, Shizuoka (JP); Narita, Takeshi, Kawasaki-shi, Kanagawa (JP); Ogawa, Junichi, Yokohama-shi, Kanagawa (JP)
(74) Representative: Grünecker, Kinkeldey, Stockmair & Schwanhäusser Anwaltssozietät

(57) **Abstract**

A porous inorganic material comprising needle-like crystals of 2Al₂O₃·B₂O₃ having a diameter of 10 µm or smaller; a porous inorganic material comprising needle-like crystals of 2Al₂O₃·B₂O₃ having a diameter of 10 µm or smaller and needle-like crystals of 9Al₂O₃·2B₂O₃ having a diameter of 10 µm or smaller; and a porous inorganic material comprising needle-like crystals of 9Al₂O₃·2B₂O₃ having a diameter of 10 µm or smaller and an aspect ratio lower than 10. These porous inorganic materials are characterized in that the needle-like crystals are distributed uniformly and randomly and mutually bonded at at least one site with respect to each crystal, and the mutual bonding of the needle-like crystals is established by the sharing of one or more needle-like-crystal constituents without the aid of a binder. These porous inorganic materials enable the excellent properties of the needle-like crystals to be easily utilized in the highest degree or have the same excellent properties as the porous inorganic material comprising needle-like crystals.

## Description

### FIELD OF THE INVENTION

The present invention relates to porous inorganic materials and processes for producing the same. More particularly, this invention relates to porous inorganic materials comprising aluminum borate needle-like crystals and useful as a reinforcement for use in producing metal matrix composites (MMCS), a structural material for high-temperature use, a heat insulating material, a friction material, a filter medium, and the like, and to processes for producing the same.

### BACKGROUND OF THE INVENTION

Ceramic whiskers comprising silicon nitride, silicon carbide, alumina, aluminum borate, potassium titanate, titanium oxide, etc. are excellent in mechanical characteristics, heat resistance, corrosion resistance, heat insulating properties, wearability, electrical insulating properties, and other properties, and have hence come to be utilized in many fields.

Porous inorganic materials obtained by molding such ceramic whiskers with a binder are known. Typical examples thereof include the so-called whisker preform, which is a reinforcement for a metal-matrix composite material.

In this application, whiskers are formed beforehand into a porous inorganic material called a preform, which is subjected to a casting process in which a molten metal is forced into the pores of the preform to obtain a metallic material reinforced with whiskers.

A porous inorganic material above mentioned, is obtained by dispersing whiskers and a binder into water, filtering the dispersion with suction, and then drying and firing the resultant green body. However, this process has the following problems. Whiskers are lightweight and fine, and are hence liable to scatter in the step of dispersion into water. A strict countermeasure should be taken against the whisker dusting because inhalation may impair workers' health. Furthermore, in the step of filtering a whisker dispersion with suction, the whiskers are unavoidably oriented in a given direction or localized. The orientation and localization in the green body will remain in the fired body to be obtained. Needless to say, a porous inorganic material in which the whiskers are distributed unevenly or oriented in a given direction never shows homogeneous and isotropic material properties. In addition, since the porous inorganic material above mentioned undergoes a considerable volume change during the period of from the filtering operation with suction to the completion of firing, it is difficult to obtain a porous inorganic material having the density and dimensional accuracy as designed. A further problem is that since the whisker-bonding strength of the binder is not so high, the porous inorganic material has insufficient mechanical strength even though the strength of the whiskers themselves is high. In the case where the porous inorganic material is used as a preform, the binder may react with a molten metal to cause an undesirable change.

JP-B-6-33193 (the term "JP-B" as used herein means an "examined Japanese patent publication") discloses a process for producing a rigid mullite whisker felt. As far as mullite whiskers are concerned, this prior art process has succeeded in solving the problems associated with the production of porous inorganic material above mentioned. This process comprises forming a green compact comprising a mixture of AlF₃ and SiO₂, heating the compact in an atmosphere of anhydrous SiF₄ at about 700 to 950°C to form rod-like topaz crystals from AlF₃ and SiO₂, and further heating the compact at about 1,150 to 1,700°C to convert the topaz crystals to needle-like single-crystal mullite whiskers. According to this process, since mullite whiskers are formed by reactions within the green compact while bonding to one another, a porous inorganic material is completed simultaneously with the completion of whisker formation. Therefore, the step of filtering whiskers with suction, which is accompanied with many difficulties, is unnecessary, and the resulting product is hence free from the above-described drawbacks arising from the step of whisker molding with suction.

However, the above prior art process, although seemingly advantageous, has a problem that the equipment and the process control are costly because of the necessity of firing in an atmosphere of anhydrous SiF₄, which is toxic. To carry out the process is hence not easy. Besides, the product is limited to mullite materials, and applications thereof are limited as a matter of course. Such a process in which whisker formation and the formation of a porous inorganic material proceed simultaneously has not yet been known with respect to any whiskers having a chemical composition different from mullite.

### SUMMARY OF THE INVENTION

An object of the present invention is to provide: a novel porous inorganic material which consists solely of needle-like crystals of aluminum borate and has excellent properties and which enables the excellent properties of the needle-like crystals to be easily utilized in the highest degree; processes for producing the porous inorganic material; and a porous inorganic material which has the same excellent properties as the above and comprises whisker-like short needle-like crystals.

The novel porous inorganic materials which the present invention has provided as a first embodiment are: a porous inorganic material comprising needle-like crystals of 2Al₂O₃·B₂O₃ having a diameter of 10 µm or smaller, in which the needle-like crystals are distributed uniformly and randomly and mutually bonded at at least one site with respect to each crystal; and a porous inorganic material comprising needle-like crystals of 2Al₂O₃·B₂O₃ having a diameter of 10 µm or smaller and needle-like crystals of 9Al₂O₃·2B₂O₃ having a diameter of 10 µm or smaller, in which the two kinds of needle-like crystals are uniformly coexistent with each other and distributed randomly and are mutually bonded at at least one site with respect to each crystal. Both porous inorganic materials are characterized in that the mutual bonding of the needle-like crystals is established by the sharing of one or more needle-like crystal constituents (i.e., aluminum borate) without the aid of a binder.

The novel porous inorganic material which the present invention has provided as a second embodiment comprises needle-like crystals of 9Al₂O₃·2B₂O₃ having a diameter of 10 µm or smaller and an aspect ratio lower than 10, in which the needle-like crystals are distributed uniformly and randomly and mutually bonded at at least one site with respect to each crystal. This porous inorganic material also is characterized in that the mutual bonding of the needle-like crystals is established by the sharing of one or more needle-like-crystal constituents without the aid of a binder.

### BRIEF DESCRIPTION OF THE DRAWINGS

Fig. 1 is a scanning electron photomicrograph (x5000) of the porous inorganic material obtained in Example 4.

Fig. 2 is a scanning electron photomicrograph (x2000) of the porous inorganic material obtained in Example 5.

### DETAILED DESCRIPTION OF THE INVENTION

First, the first embodiment will be explained below.

Typical examples of the "needle-like crystals having a diameter of 10 µm or smaller" are the so-called whiskers.

As is well known, the term "whisker" means an needle-like single crystal having exceedingly high tensile strength. Whiskers generally have a diameter ranging from a submicron size to several tens of micrometers and an aspect ratio (length/diameter ratio) of 10 or higher. The smaller the diameter of whiskers, the more the tensile strength thereof becomes high and close to the theoretical strength. In this specification, the term "needle-like crystals having a diameter of 10 µm or smaller" means not only whiskers, having the dimensional characteristics as described above, but also needle-like crystals which are almost equal in diameters to whiskers and have high tensile strength but which are not regarded as whiskers because of their low aspect ratios. The upper limit of the diameter of whiskers has been fixed at 10 µm because of the fact that needle-like aluminum borate crystals increase in tensile strength with the decreasing diameter thereof and that the tensile strength thereof increases abruptly around a diameter of 10 µm to make the crystals useful as whiskers. Consequently, the diameter of 10 µm is not a critical value in relation to the effects of the present invention.

In the inorganic materials of the present invention, the individual needle-like crystals are bonded not with a binder but merely by the sharing of one or more constituents of each needle-like crystal. This sharing of constituents is attributable to the crystal growth mechanism in which needle-like aluminum borate crystals come into contact with one another during the growth thereof and thereafter continue to grow while sharing, at the contact sites, part of the aluminum borate constituting the needle-like crystals.

Therefore, the porous inorganic materials of the present invention have a constitution in which needle-like crystals not only are bonded at their sides as if they were fused together, but also pierce through and intersect with one another. Such a constitution is never observed in the case where needle-like crystals formed beforehand are bonded with a binder or by sintering.

Owing to the fact that the porous inorganic materials consist solely of needle-like crystals which are non-oriented and distributed quite randomly (but uniformly) and the fact that the needle-like crystals are mutually bonded by the sharing of needle-like-crystal constituents without the aid of a binder, the porous inorganic materials of the invention exhibit excellent strength, which is far higher than that of any conventional molded whisker object or whisker sinter formed using a binder, and have a high degree of heat resistance and corrosion resistance.

The above-described porous inorganic materials according to the first embodiment of the present invention can be produced by a process which comprises uniformly mixing a powder of either aluminum oxide or an aluminum compound capable of forming aluminum oxide on heating in air with a powder of either boron oxide or a boron compound capable of forming boron oxide on heating in air, molding the resultant powder mixture, and then firing the resultant molding to thereby form needle-like crystals of 2Al₂O₃·B₂O₃ or both the needle-like crystals and needle-like crystals of 9Al₂O₃·2B₂O₃.

For obtaining a product comprising whisker-form needle-like crystals having a high aspect ratio, it is effective to incorporate into the raw material mixture an additive which functions to grow needle-like crystals into a whisker form. Usable examples of the additive include nickel oxide, nickel, nickel compounds capable of forming nickel oxide on heating in air, iron oxide, iron, iron compounds capable of forming iron oxide on heating in air, vanadium oxide, vanadium compounds capable of forming vanadium oxide on heating in air, and silica.

The porous inorganic material according to the second embodiment of the present invention is characterized firstly by comprising needle-like crystals which have almost the same diameters as whiskers and high tensile strength but are short crystals having an aspect ratio lower than 10. Such needle-like crystals are not regarded as whiskers, and there has been no example of use of these crystals as a molding material.

The upper limit of the diameter of the needle-like crystals of 9Al₂O₃·2B₂O₃ has been fixed at 10 µm because of the fact that the needle-like crystals increase in tensile strength with the decreasing diameter thereof and that the tensile strength thereof increases abruptly around a diameter of 10 µm. However, the diameter of 10 µm is not a critical value in relation to the effects of the present invention.

The porous inorganic material according to the second embodiment is characterized secondly in that the crystals of 9Al₂O₃·2B₂O₃ are bonded not with a binder but by the mere sharing of constituents of the individual needle-like crystals. This sharing of constituents is attributable to the crystal growth mechanism in which needle-like crystals of 9Al₂O₃·2B₂O₃ each comes into contact with adjacent ones during the growth thereof in the step of firing, which will be described later in detail, and the needle-like crystals thereafter continue to grow while sharing part of the constituents thereof at the contact sites.

Therefore, like the porous inorganic materials according to the first embodiment of the present invention, the porous inorganic material according to the second embodiment has the constitution in which needle-like crystals not only are bonded at their sides as if they were fused together, but also pierce through and intersect with one another, which constitution is never observed in the case where needle-like crystals formed beforehand are bonded with a binder or by sintering. Owing to the fact that the porous inorganic material consists solely of needle-like crystals which are non-oriented and distributed quite randomly (but uniformly) and the fact that the needle-like crystals are mutually bonded by the sharing of needle-like-crystal constituents without the aid of a binder, the porous inorganic material of the invention exhibits excellent strength, which is far higher than that of any conventional molded whisker object or whisker sinter formed using a binder, and has a high degree of heat resistance and corrosion resistance.

The porous inorganic material according to the second embodiment can be produced by a process which comprises uniformly mixing a powder of either aluminum oxide or an aluminum compound capable of forming aluminum oxide on heating in air with a powder of either boron oxide or a boron compound capable of forming boron oxide on heating in air, molding the resultant powder mixture, and then firing the resultant molding to thereby form needle-like crystals of 9Al₂O₃·2B₂O₃.

Processes for producing the porous inorganic materials according to the first and second embodiments of the present invention will be explained below in detail.

First, the process for producing the porous inorganic materials according to the first embodiment will be explained below.

The aluminum compound which can be used as a raw material is aluminum oxide or an aluminum compound capable of forming aluminum oxide on heating in air (hereinafter referred to as an aluminum oxide precursor). The aluminum oxide precursor is preferably one capable of forming aluminum oxide on heating at a temperature of about 1,000°C or lower in air, with the lower limit of the temperature being generally about 350°C. Preferred examples thereof include aluminum hydroxide, aluminum sulfate, aluminum nitrate, and aluminum chloride.

The boron compound to be reacted with the aluminum compound is boron oxide (boron trioxide, B₂O₃) or a boron compound capable of forming boron oxide on heating in air (hereinafter referred to as a boron oxide precursor). The boron oxide precursor is preferably one capable of forming boron oxide on heating at a temperature of about 1,000°C or lower, with the lower limit of the temperature being generally about 150°C. Examples of the boron oxide precursor include boric acid (H₃BO₃), tetraboric acid (H₂B₄O₇), and metaboric acid (HBO₂).

The aluminum compound and the boron compound can be preferably used in a proportion of from 9:2 to 1:1 in terms of Al₂O₃:B₂O₃ ratio (molar ratio; the same applies hereinafter).

The aluminum compound and boron compound used as raw materials are finely powdered and then blended to give a homogeneous mixture. The mixing ratio between the two compounds, in combination with the temperature at which a molding of the mixture is to be fired, influences the kind of needle-like aluminum borate crystals to be finally formed. For example, when a raw material mixture is prepared so as to have an Al₂O₃/B₂O₃ ratio of 2 or lower and a molding thereof is fired at about 800 to 1,035°C, then a product consisting solely of needle-like crystals of 2Al₂O₃·B₂O₃ is obtained. When the raw materials are mixed in a proportion in the range of 2<Al₂O₃/B₂O₃<4.5 and a molding of the mixture is fired at 800 to 1,035°C, then a product is obtained in which needle-like crystals of 2A₂O₃·B₂O₃ coexist with needle-like crystals of 9Al₂O₃·2B₂O₃.

After the raw materials are sufficiently mixed to obtain a homogeneous mixture, the mixture is molded into a desired shape by a molding method such as, e.g., powder compaction molding, extrusion molding, injection molding, or slurry casting molding. Preferred among these is the powder compaction molding method from the standpoints that there is no need of using water or a molding aid and that a homogeneous molding is obtained. In the powder compaction molding method, the raw material mixture in the powder state is put in a die and compacted. A higher compacting pressure results in a compact having a higher density, which gives a product having a higher density. It is therefore possible to obtain products having densities ranging from about 0.4 to 2.3 g/cm³ (corresponding to porosities of about from 86 to 20%) by regulating the compacting pressure. An effective method for obtaining a product having an even lower density is to mix the raw molding materials beforehand with a powdered organic substance, e.g., starch. The powdered organic substance thus incorporated will be burnt off in the subsequent firing step to leave pores, thereby reducing the density of the product. By this method, a product having a density as low as about 0.15 g/cm³ (corresponding to a porosity of about 95%) can be obtained.

A lubricant for facilitating compaction of the raw material mixture may be used in such an amount as not to inhibit the formation of needle-like aluminum borate crystals in the firing step. However, use of the lubricant is not essential to the processes of the present invention.

The compact taken out of the die is fired in a furnace. Air may be use as the atmosphere for firing. Use of an aluminum oxide precursor or a boron oxide precursor as a starting compound results in formation of the corresponding oxide therefrom during heating. The temperature necessary to yield needle-like crystals of aluminum borate from aluminum oxide and boron oxide varies depending on the raw material composition as stated above, and is in the range of about from 800 to 1,400°C.

Needle-like crystals of aluminum borate begin to grow from aluminum oxide and boron oxide in the compact. In this stage, the sites where the crystal growth occurs are evenly distributed throughout the starting-compound compact, and the crystals grow in quite random three-dimensional directions. Since the growth of needle-like crystals proceeds in a dense compact, growing needle-like crystals come into contact with one another, and any two needle-like crystals in contact with each other come to have a contact site where aluminum borate is shared by the two crystals. Thus, tenacious bonds are formed among needle-like crystals without the necessity to add a binder beforehand, whereby a porous inorganic material is formed.

After completion of the reaction for forming needle-like crystals of aluminum borate, the excess boron oxide remaining can be removed by finally washing the fired molding with hot water to dissolve the boron oxide. In the case where a fired molding in which needle-like crystals of 9Al₂O₃·2B₂O₃ coexist with needle-like crystals of 2Al₂O₃·B₂O₃ was obtained from a raw material mixture having an Al₂O₃/B₂O₃ ratio of from 2 to 4.5, the treatment for removing the excess boron oxide can be omitted because all the B₂O₃ reacts with aluminum oxide when the reaction period is prolonged sufficiently.

By the method described above, a porous inorganic material is obtained which comprises needle-like crystals of 2Al₂O₃·B₂O₃ or comprises these crystals and needle-like crystals of 9Al₂O₃·2B₂O₃ depending on the proportion of raw materials. This product has substantially the same shape as the unfired compact. The shrinkage resulting from structural change is about 10% at the most. Fine intercommunicating pores remain in the product, and the volume thereof, which is determined by the density of the unfired compact and the amount of the excess boron oxide, is usually from 20 to 95% based on the volume of the product. As a result, the product has a density of about from 2.3 to 0.15 g/cm³.

The needle-like crystals of aluminum borate constituting the porous inorganic material obtained by the process described above usually have a diameter of about 10 µm or smaller and an aspect ratio of 10 or lower. These needle-like crystals are almost equal to whiskers in diameter and properties, except for the low aspect ratio. However, in the case where a porous inorganic material comprising whiskers having a higher aspect ratio is to be obtained, the additive described hereinabove is used which functions to accelerate the growth of needle-like crystals.

Besides metal oxides such as nickel oxide, iron oxide, and vanadium oxide, examples of the usable additive include powders of metals (as a simple substance) and metal compounds which each is capable of forming any of those oxides on heating in air (e.g., hydroxides, chlorides, carbonates, sulfates, and organic acid salts of nickel, iron, and vanadium) and silica. Two or more of these additives may be used in combination.

The preferred range of the added amount of the additive varies depending on the kind of the additive. In general, however, the preferred range thereof is from 0.1 to 10% by weight in terms of oxide amount originated from the additive, based on the amount of aluminum oxide (or in the case where another aluminum compound was used, based on the amount of the aluminum oxide formed therefrom). It is desirable to use an additive in an amount as small as possible. The use amount thereof is more preferably about from 1 to 2% by weight. Even when an additive is added in an excess amount, not only a further increase in aspect ratio is not expected, but the additive may impair the properties of the whiskers (hence, of the product).

The additive which contributed to the growth of needle-like crystals into a whisker form remain as an oxide in the needle-like crystals. Most of the oxide seems to be distributed in surface parts of the needle-like crystals.

Next, the process for producing the porous inorganic materials according to the second embodiment will be explained.

The porous inorganic material according to the second embodiment can be obtained in substantially the same manner as for the first embodiment.

However, in producing the porous inorganic material according to the second embodiment, an aluminum compound and a boron compound as raw materials are used in a proportion of desirably from 9:2 to 9:6 in terms of Al₂O₃:B₂O₃ molar ratio. These raw material are finely powdered and mixed to give a homogeneous mixture. The temperature necessary to yield needle-like crystals of 9Al₂O₃·2B₂O₃ from aluminum oxide and boron oxide is in the range of about from 1,100 to 1,400°C.

Needle-like crystals of aluminum borate begin to grow from aluminum oxide and boron oxide in a compact. In this stage, the sites where the crystal growth occurs are evenly distributed throughout the starting-compound compact, and the crystals grow in quite random three-dimensional directions. Since the growth of needle-like crystals proceeds in a dense compact, growing needle-like crystals come into contact with one another, and any two needle-like crystals in contact with each other come to have a contact site where 9Al₂O₃·2B₂O₃ is shared by the two crystals. Thus, tenacious bonds are formed among crystals without the necessity to add a binder beforehand, whereby a porous inorganic material is formed.

After completion of the reaction for forming crystals of 9Al₂O₃·2B₂O₃, the excess boron oxide remaining can be removed by continuously heating the fired molding at a high temperature to vaporize the boron oxide, or by finally washing the fired molding with hot water to dissolve the boron oxide.

By the method described above, a porous inorganic material comprising needle-like crystals of 9Al₂O₃·2B₂O₃ (provided that the needle-like crystals have never grown into whiskers, i.e., long crystals having an aspect ratio of 10 or higher) can be obtained. This product has substantially the same shape as the unfired compact. The shrinkage resulting from structural change is about 10% at the most. Fine intercommunicating pores remain in the product, and the volume thereof, which is determined by the density of the unfired compact and the amount of the excess boron oxide, is usually from 20 to 95% based on the volume of the product. As a result, the product has a density of about from 2.3 to 0.15 g/cm³.

The porous inorganic materials according to the first and second embodiments of the present invention can be used in any desired applications either in the form imparted to the raw material mixture during the production process or after having been suitably cut. For example, the porous inorganic materials can be extensively used as a preform for producing various composite materials, a structural material for high-temperature use, a heat insulating material, a filter medium, and the like so as to take advantage of both the excellent heat and corrosion resistance of the needle-like aluminum borate crystals or needle-like 9Al₂O₃·2B₂O₃ crystals and the high strength of the porous inorganic materials which is attributable to the mutual bonding of the needle-like crystals established by the sharing of constituents thereof without the aid of a binder.

The present invention will be explained below in more detail by reference to Examples, but the invention should not be construed as being limited thereto.

### EXAMPLE 1

Ten grams of aluminum hydroxide as an aluminum oxide precursor was thoroughly mixed with 5.28 g of orthoboric acid (H₃BO₃) as a boron oxide precursor in a mortar to prepare a raw material mixture having an Al₂O₃/B₂O₃ ratio of 1.5. This mixture was packed into a die and compacted to obtain a compact having a density of 0.56 g/cm³. The compact was placed in an electric furnace and fired at 1,000°C for 6 hours. The fired compact was washed with hot water to remove the remaining boron oxide.

Needle-like crystals of 2Al₂O₃·B₂O₃ (average diameter, 0.5 µm; length, about 3 µm) were formed through the heat treatment. As a result, a porous material (weight, 8.75 g; density, 0.58 g/cm³) composed of these needle-like crystals mutually bonded during the growth thereof was obtained.

### EXAMPLE 2

Ten grams of aluminum hydroxide as an aluminum oxide precursor was thoroughly mixed with 3.25 g of orthoboric acid (H₃BO₃) as a boron oxide precursor in a mortar to prepare a raw material mixture having an Al₂O₃/B₂O₃ ratio of 2.25. This mixture was packed into a die and compacted to obtain a compact having a density of 0.56 g/cm³. The compact was placed in an electric furnace and fired at 1,030°C for 6 hours. The fired compact was washed with hot water to remove the remaining boron oxide.

Needle-like crystals of 2Al₂O₃·B₂O₃ and needle-like crystals of 9Al₂O₃·2B₂O₃ were formed through the heat treatment. As a result, a porous material (weight, 8.12 g; density, 0.53 g/cm³) composed of these needle-like crystals mutually bonded during the growth thereof was obtained. The two kinds of needle-like crystals had an average diameter of 0.6 µm and a length of about 4 µm.

### EXAMPLE 3

Ten grams of aluminum hydroxide as an aluminum oxide precursor was thoroughly mixed with 3.25 g of orthoboric acid (H₃BO₃) as a boron oxide precursor and 0.13 g of nickel oxide as an additive in a mortar to prepare a raw material mixture having an Al₂O₃/B₂O₃ ratio of 2.25. This mixture was packed into a die and compacted to obtain a compact having a density of 0.42 g/cm³. The compact was placed in an electric furnace and fired at 1,030°C for 6 hours. The fired compact was washed with hot water to remove the remaining boron oxide.

Whiskers of 2Al₂O₃·B₂O₃ and whiskers of 9Al₂O₃·2B₂O₃ were formed through the heat treatment. As a result, a porous material (weight, 8.71 g; density, 0.56 g/cm³)which composed of these whiskers mutually bonded during the growth thereof was obtained.

The two kinds of whiskers had an average diameter of 0.1 µm and a length of about 4 µm.

### EXAMPLE 4

Ten grams of aluminum hydroxide as an aluminum oxide precursor was thoroughly mixed with 7.93 g of orthoboric acid as a boron oxide precursor and 0.13 g of nickel oxide as an additive in a mortar to prepare a raw material mixture having an Al₂O₃/B₂O₃ ratio of 1.0. This mixture was packed into a die and compacted to obtain a compact having a density of 0.57 g/cm³. The compact was placed in an electric furnace and fired at 1,000°C for 6 hours. The fired compact was washed with hot water to remove the remaining boron oxide.

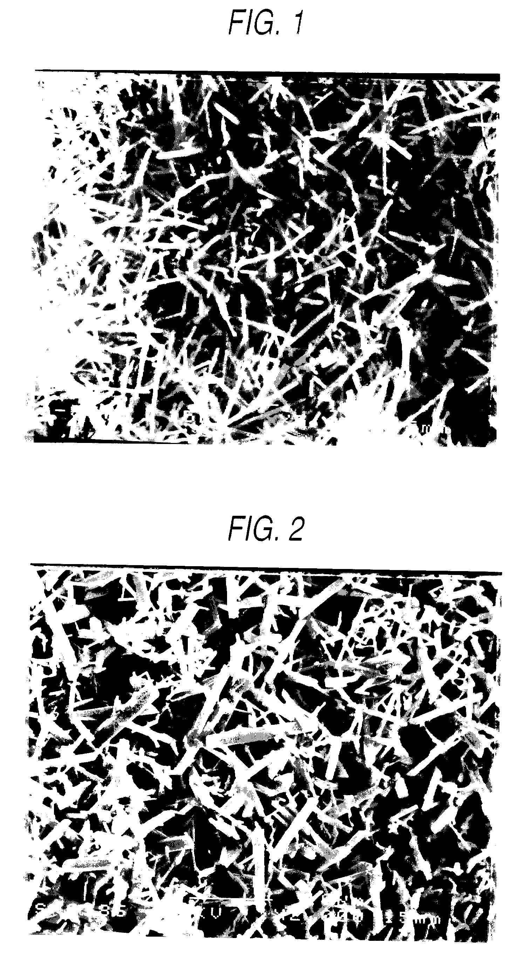

Whiskers of 2Al₂O₃·B₂O₃ (average diameter, 0.2 µm; length, about 5 µm) were formed through the heat treatment. As a result, a porous material (weight, 8.75 g; density, 0.58 g/cm³) composed of these whiskers mutually bonded during the growth thereof was obtained. An electron photomicrograph of this material is shown in Fig. 1.

### EXAMPLE 5

Ten grams of aluminum hydroxide as an aluminum oxide precursor was thoroughly mixed with 1.97 g of boron oxide in a mortar to prepare a raw material mixture having an Al₂O₃/B₂O₃ ratio (molar ratio) of 2.26. This mixture was packed into a die and compacted to obtain a compact having a density of 0.42 g/cm³. The compact was placed in an electric furnace and fired at 1,250°C for 6 hours. The fired compact was washed with hot water to remove the remaining boron oxide.

Needle-like crystals of 9Al₂O₃·2B₂O₃ (average diameter, 1.1 µm; length, about 8 µm) were formed through the heat treatment. As a result, a porous material (weight, 8.01 g; density, 0.51 g/cm³) composed of these needle-like crystals mutually bonded during the growth thereof was obtained. An electron photomicrograph of this material is shown in Fig. 2.

As described above, needle-like crystals of 9Al₂O₃·2B₂O₃ which are very similar to whiskers except for their low aspect ratio can be formed and a porous inorganic material can be obtained simultaneously according to the present invention by merely molding an inexpensive raw material mixture and firing the resultant molding to react the same.

This process yields needle-like crystals without the necessity of using expensive whiskers as a raw material. Consequently, the above process is free from the various problems associated with the conventional process in which a whisker dispersion is filtered with suction, which problems arise from the scattering, uneven distribution, or orientation of whiskers, etc.

In the case where a raw material mixture is molded by dry compaction, product density can be varied by merely changing the compacting pressure. It is therefore possible to obtain products having various densities in a wide range according to applications thereof.

The porous inorganic materials of the present invention are composed of completely non-oriented needle-like crystals of 9Al₂O₃·2B₂O₃ which have been united with one another without the aid of a binder. Since no binder parts, which constitute physical or chemical defects in a material, are present therein, the porous inorganic materials of the invention highly take advantage of the excellent properties of the needle-like crystals of 9Al₂O₃·2B₂O₃ which properties are almost the same as those of whiskers. Therefore, the porous inorganic materials of the present invention are excellent in strength, heat resistance, oxidation resistance, etc., and in homogeneity in these properties.

While the invention has been described in detail and with reference to specific embodiments thereof, it will be apparent to one skilled in the art that various changes and modifications can be made therein without departing from the spirit and scope thereof.

## Claims

1. A porous inorganic material comprising needle-like crystals of 2Al₂O₃·B₂O₃ having a diameter of 10 µm or smaller, said needle-like crystals being distributed uniformly and randomly and mutually bonded at at least one site with respect to each crystal, the mutual bonding of the needle-like crystals being established by the sharing of one or more needle-like-crystal constituents without the aid of a binder.

2. A porous inorganic material comprising needle-like crystals of 2Al₂O₃·B₂O₃ having a diameter of 10 µm or smaller and needle-like crystals of 9Al₂O₃·2B₂O₃ having a diameter of 10 µm or smaller, said two kinds of needle-like crystals being uniformly coexistent with each other and distributed randomly and being mutually bonded at at least one site with respect to each crystal, the mutual bonding of the needle-like crystals being established by the sharing of one or more needle-like-crystal constituents without the aid of a binder.

3. The porous inorganic material of claim 1 or 2, wherein the needle-like crystals are whiskers having an aspect ratio of 10 or higher.

4. The porous inorganic material of claim 1 or 2, wherein the needle-like crystals have an aspect ratio lower than 10.

5. A process for producing a porous inorganic material which comprises uniformly mixing a powder of either aluminum oxide or an aluminum compound capable of forming aluminum oxide on heating in air with a powder of either boron oxide or a boron compound capable of forming boron oxide on heating in air, molding the resultant powder mixture, and then firing the resultant molding to thereby form either needle-like crystals of 2Al₂O₃·B₂O₃ or needle-like crystals of 2Al₂O₃·B₂O₃ and needle-like crystals of 9Al₂O₃·2B₂O₃.

6. A process for producing a porous inorganic material which comprises uniformly mixing a powder of either aluminum oxide or an aluminum compound capable of forming aluminum oxide on heating in air with a powder of either boron oxide or a boron compound capable of forming boron oxide on heating in air, molding the resultant powder mixture, and then firing the resultant molding at 800 to 1,035°C to thereby form either needle-like crystals of 2Al₂O₃·B₂O₃ or needle-like crystals of 2Al₂O₃·B₂O₃ and needle-like crystals of 9Al₂O₃·2B₂O₃.

7. The process for producing a porous inorganic material of claim 5 or 6, wherein the aluminum oxide or aluminum compound capable of forming aluminum oxide on heating in air and the boron oxide or boron compound capable of forming boron oxide on heating in air are used in a proportion of from 9:2 to 1:1 in terms of Al₂O₃:B₂O₃ molar ratio.

8. The process for producing a porous inorganic material of claim 5 or 6, wherein an additive which functions to grow needle-like crystals of aluminum borate into whiskers having an aspect ratio of 10 or higher is incorporated into the powder mixture.

9. The process of claim 8, wherein the additive which functions to grow needle-like crystals of aluminum borate into whiskers having an aspect ratio of 10 or higher is a powder of a compound or metal selected from the group consisting of nickel oxide, nickel, nickel compounds capable of forming nickel oxide on heating in air, iron oxide, iron, iron compounds capable of forming iron oxide on heating in air, vanadium oxide, vanadium compounds capable of forming vanadium oxide on heating in air, and silica.

10. The process for producing a porous inorganic material of claim 8, wherein the additive which functions to grow needle-like crystals of aluminum borate into whiskers having an aspect ratio of 10 or higher is used in an amount of from 0.1 to 10% by weight based on the amount of the aluminum oxide or in the case where an aluminum compound capable of forming aluminum oxide on heating in air is used, based on the amount of the aluminum oxide formed therefrom.

11. The process for producing a porous inorganic material of claim 5 or 6, wherein after the formation of needle-like crystals of aluminum borate by firing, the resultant porous material is washed with hot water to remove the excess boron compound.

12. A porous inorganic material comprising needle-like crystals of 9Al₂O₃·2B₂O₃ having a diameter of 10 µm or smaller and an aspect ratio lower than 10, said needle-like crystals being distributed uniformly and randomly and mutually bonded at at least one site with respect to each crystal, the mutual bonding of the needle-like crystals being established by the sharing of one or more needle-like crystal constituents without the aid of a binder.

13. A process for producing a porous inorganic material comprising needle-like crystals of 9Al₂O₃·2B₂O₃ having a diameter of 10 µm or smaller and an aspect ratio lower than 10, said needle-like crystals being distributed uniformly and randomly and mutually bonded at at least one site with respect to each crystal, the mutual bonding of the needle-like crystals being established by the sharing of one or more needle-like crystal constituents without the aid of a binder, which comprises uniformly mixing a powder of either aluminum oxide or an aluminum compound capable of forming aluminum oxide on heating in air with a powder of either boron oxide or a boron compound capable of forming boron oxide on heating in air, molding the resultant powder mixture, and then firing the resultant molding to thereby form needle-like crystals of 9Al₂O₃·2B₂O₃.

14. A process for producing a porous inorganic material comprising needle-like crystals of 9Al₂O₃·2B₂O₃ having a diameter of 10 µm or smaller and an aspect ratio lower than 10, said needle-like crystals being distributed uniformly and randomly and mutually bonded at at least one site with respect to each crystal, the mutual bonding of the needle-like crystals being established by the sharing of one or more needle-like-crystal constituents without the aid of a binder, which comprises uniformly mixing a powder of either aluminum oxide or an aluminum compound capable of forming aluminum oxide on heating in air with a powder of either boron oxide or a boron compound capable of forming boron oxide on heating in air, molding the resultant powder mixture, and then firing the resultant molding at 1,100 to 1,400°C to thereby form needle-like crystals of 9Al₂O₃·2B₂O₃.

15. The process for producing a porous inorganic material of claim 13 or 14, wherein the aluminum oxide or aluminum compound capable of forming aluminum oxide on heating in air and the boron oxide or boron compound capable of forming boron oxide on heating in air are used in a proportion of from 9:2 to 9:6 in terms of Al₂O₃:B₂O₃ molar ratio.

16. The process for producing a porous inorganic material of claim 13 or 14, wherein after the formation of needle-like crystals of 9Al₂O₃·2B₂O₃ by firing, the resultant porous material is heated at a high temperature or washed with hot water to remove the excess boron compound.
